# EUROPEAN PATENT SPECIFICATION

(11) **EP 2 352 666 B1**
(45) Date of publication and mention of the grant of the patent: **13.03.2013**
(21) Application number: 08878019.2
(22) Date of filing: 06.11.2008
(51) Int. Cl.: B62D 35/00

(54) **AERODYNAMIC DEVICE FOR A VEHICLE**
AERODYNAMISCHE VORRICHTUNG FÜR EIN FAHRZEUG
DISPOSITIF AÉRODYNAMIQUE DESTINÉ À UN VÉHICULE

(43) Date of publication of application: 10.08.2011
(73) Proprietor: Volvo Lastvagnar AB, 405 08 Göteborg (SE)
(72) Inventor: HJELM, Linus, S-414 83 Göteborg (SE); BERGQVIST, Björn, S-434 47 Kungsbacka (SE)
(74) Representative: Fröhling, Werner Otto
(86) International application number: PCT/SE2008/000632
(87) International publication number: WO 2010/053409

(56) References cited:
- WO-A1-2006/060852
- DE-A1-102005 047 113
- US-A- 4 688 841
- US-A- 5 000 508
- US-B1- 6 409 252

## Description

### TECHNICAL FIELD

The invention relates a device for improvement of the aerodynamic properties of a vehicle. In particular relates the invention to a device which improves the properties at the rear end of a vehicle or trailer having a box shape. WO 2006/060852 discloses an aerodynamic device according to the preamble of claim 1.

### BACKGROUND ART

In recent years there has been an increased interest in improving the aerodynamic properties of vehicles in general. A major reason for this is the increased fuel costs and improving the aerodynamic properties of vehicles may thus reduce the fuel consumption and thus the fuel costs. In particular professional companies in the transport and load carrying business feel an urge to keep down the fuel costs why there is a desire among producers of load carrying vehicles to provide vehicles having a low fuel consumption. Many of the load carrying vehicles have a box shape such that its load compartment or trailer is essentially box shaped. There are certain benefits of this shape, in particular that it is a suitable shape for managing to load as much as possible in the load compartment. However, the rear end of the load compartment will thus comprise right-angled angles and have a shape which is not aerodynamically adapted. In order to improve the aerodynamic properties and achieve a reduction of the wind resistance, the rear end of a trailer or load compartment has been modified. The use of rigid structures, e.g. air foils or the like devices, which are permanently mounted in order to improve the aerodynamic properties of a vehicle are well known in the art. However, such structures are usually not convenient for trucks or trailers since they probably will get in the way for the doors to the loading compartment. Hence, such a structure would most probably be needed to be easily detachable or mounted such that they do not interfere with the access to the load compartment through the door, e.g. by being mounted only to the doors. However, these kinds of structures would add some length to the trailer/truck and in many countries are there restrictions to the length of the vehicle such that the addition of an air foil may make the vehicle too long or the load compartment it self must be smaller, i.e. shorter. In US 4,142,755 is disclosed a structure which purpose is to streamline forming the rear part of a trailer or truck. The structure is either formed by rigid rods supporting a flexible material forming the surface of the structure or by a rigid shield. In order to overcome the problems above it has been suggested to use devices which easily may be switched between a deployed position and a storage position. Such a modification is disclosed in for example US 5,823,610 wherein it is described that the rear end of a truck or trailer has been provided with an inflatable bladder which position may be changed between a deployed position and a stored position by being wind up or wind out on a rolling cylinder. When the bladder is in its deployed position, it may be inflated such that the rear end of the trailer forms a more beneficial aerodynamic shape. Still another example of an inflatable air bladder is disclosed in US 5,375,903 in which the air bladder is in a deflated condition at rest and is inflated by dynamic pressure due to movement of the vehicle. The air bladder further comprises spoiler element which, when the air bladder is inflated, moves to a deployed position in which it extends angularly with respect to the vehicle. Also US 6,409,252 describes an inflatable arrangement in order to improve the aerodynamics at the rear end of a trailer. The arrangement which may use a similar inflating device as described in US 5,375,903. The structure in US 6,409,252 is provided with internal cords extending horizontally, in order to stabilize and flatten the lateral surfaces, and vertically, so as to flatten upper and lower surfaces. In US 4,688,841 is described a device for reducing air drag on a vehicle which is self-inflated by a pressure differential between the outer and inner surfaces of a fabric enclosure.

Hence, there are known a number of inflatable structures in order to improve the aerodynamics at the rear end of a trailer or truck. These structures has the benefit of being flexible and may change between a deployed, inflated state when there is a desire to reduce the wind resistance and a relaxed, uninflated state where the structure is essentially flat. However, such structures, i.e. inflatable structures, will collapse if they are not air tight made or there is a hole in the structure. Furthermore, there is needed some kind of inflating mechanism in order to fill air into the structure. Hence, there is a desire to provide a flexible structure which not have the above deficiencies while

### DISCLOSURE OF INVENTION

The invention relates to an aerodynamic device for reducing the wind resistance of a vehicle or a trailer. The aerodynamic device is intended to be mounted to a vehicle structure at or close to the rear end of the vehicle or trailer. The invention is in particular suitable for a vehicle having a box shape e.g. an ordinary cargo truck, bus or trailer, having a rear end wall being essentially right-angled with respect to the side walls, roof and floor. The aerodynamic device comprises a flexible sheet material. The sheet material is preferably collapsible and not self supporting such that it may be arranged to the vehicle or trailer such that it is hanging along the vehicle structure when it is in a resting position. The flexible sheet material is further arranged such that it extend beyond the rear end of the vehicle or trailer when deployed. The flexible sheet material comprises an inner side or inside and an outer side or outside. The inner side is the side which faces towards the vehicle structure when the flexible sheet is at rest and facing towards a longitudinal centreline of the vehicle when it is deployed. The outer side is the side which faces away from the vehicle structure when the flexible sheet structure is in its resting position and faces away from a longitudinal centreline of the vehicle when it is deployed. The flexible material is attached to the vehicle structure such that it deploys as a result of the coanda effect. The coanda effect induces a lower pressure on the outer side of the flexible sheet material than on the inner side of the flexible sheet material when the vehicle or trailer is moving in a forward direction. The pressure difference is depending on the speed of the vehicle and a higher speed results in a higher pressure difference and thus a stronger force striving to deploy the sheet. According to the invention the flexible material is further attached to the vehicle structure by at least one restrictor such that the restrictor by the restriction shapes the flexible material in its deployed state to a desired shape.

An advantage with the present invention is that the aerodynamic device will automatically collapse when the vehicle is not moving or moving slowly such that the device will not add any substantial length to the vehicle. A further advantage with the present device is that it is working without a confined space which shall be inflated and there is thus no need for any kind of inflating mechanism or risking that a hole should ruin the arrangement. Hence, the flexible sheet material may be made from a simple fabric or sheet which comprises or forms a confined space. Due to the omitting of a confined, inflatable space and the collapsible structure, the aerodynamic device may easily be designed such that it allows easy access to the load compartment through a rear end door since the device may comprise separate pieces located at the sides respectively at the roof. Hence, the flexible sheet material may be designed such that it has one side tightly attached to the vehicle structure and an opposite, free end which is spaced apart from the vehicle structure. The free end has however a restricted freedom to move by the restrictors but may move to be at a distance of from about 10 cm to 2 meters from the rear end of the vehicle. The arrangement may thus be easily designed such that no extra measures need to be done in order to gain access to the load compartment when the vehicle is stopped.

Even though it is possible to use separate sheets for the different edges it would also be possible to use a single sheet shaped to fit and be attached to several edges, e.g. one single sheet adapted to fit along the side edges and the roof edges. On the other hand, it would also be possible to use several sheets for one edge, e.g. it may be desired to have smaller sections which are divided along one edge in order to easily open a door or a loading platform. Hence, there may be several flexible sheet materials located on the same vehicle or trailer. There may for example be one flexible sheet located at each side of the rear end of the vehicle. The use of two sheets, one at each side, will make it easy to gain access to the load compartment through the rear door since the sheets will collapse and hang along each side of the vehicle such that there is no hinder for entering through the back door. There may also be a sheet at the roof. Still another sheet may be provided at the floor level. However, the air streaming profile is usually different at the lower edge and the effect of such a sheet is usually less important than providing sheets at the sides and at the roof.

The aerodynamic device may be arranged such that it is deployed completely at a relative velocity of the vehicle and surrounding air at a velocity of 50 km/h or above, at 70 km/h or above or at 80 km/h or above. In general, the aerodynamic device shall be configured to provide its optimum drag reducing effect at velocities around 80 - 100 km/h which is the speed at which most commercial vehicles are driven when on duty and it is when the vehicle is moving at relatively high velocities, e.g. at 70 km/h and above, that the air drag resistance has a major impact on the vehicle rolling resistance.

Hence, the flexible sheet material which forms part of the drag reducing aerodynamic device is thus normally attached to the vehicle at or close to the edges of the rear end of the vehicle, either by being attached all the way along the edge or being attached at attachment points along the edge to fixate a first side of the sheet material.

The flexible material is attached along one of it sides (a first side) to the side of the vehicle structure or in close vicinity to the conjunction of the side and the end part of the vehicle structure or trailer, i.e. the rear edges, so as to provide a continuation of the frame which is essentially in flush with the vehicle structure when the aerodynamic device is deployed. By attaching the flexible material this way the aerodynamic properties may be optimized. The flexible sheet structure is shaped to gently curve inwards towards a longitudinal centreline in the vehicle direction.

The restrictor or restrictors attached to the flexible sheet material and used to shape the deployed aerodynamic device may be made of a collapsible material such as a rope, wire, belts, flexible sheets or the like collapsible structures or by one or several rigid structures, e.g. bars, rods or sticks. If the restrictors are made of collapsible structures such as ropes, belts or the like, the restrictors will naturally collapse when the aerodynamic device is in its collapsed state. If the restrictor is made of a more rigid structure, it may be hingedly connected to the vehicle structure such that it may pivot to extend out from the vehicle body when the aerodynamic device is in its deployed state and pivot to hang along the vehicle structure when the aerodynamic device is in its collapsed state or resting position. The restrictors may also be of a sheet material and be attached to the aerodynamic, drag reducing sheet material along a continuous line.

The restrictors may for example be attached to the flexible sheet at or close to a free edge of the sheet, e.g. the loose side or free edge of the flexible sheet material opposite to the first side of the flexible sheet material which is attached to the vehicle structure. The restrictors may be anchored to the vehicle structure such that the restrictor allows the sheet material to deploy to a desired extension and shape. However, it is not necessary to attach the restrictors like this and the attachment points of the restrictors may be changed or further restrictors may be added at these attachment points. The number, length and positions of the restrictors may vary such that a desired shape of the aerodynamic device in its deployed state is achieved.

The aerodynamic device may also be designed such that said sheet material is provided with rigid or semi rigid structures which aids in forming the sheet material to a desired shape when it is in its deployed state. These structures may for example be similar to battens used for sails which are self supporting but still somewhat flexible and aids in stiffening the sails (flexible sheets) to reduce fluttering or flapping the flexible sheet.

The rigid structures, e.g. battens, may be smoothly curved such that they will shape the flexible material to smoothly bend inwards towards a longitudinal centreline of the vehicle. In this case, the rigid structures are thought to have an extension mainly in the horizontal direction. These structures may of course also be located in a vertical direction of extension or any desired orientation in order to aid to shape the form of the flexible sheet material and a desired rigidity of the flexible sheet material.

The flexible sheet material forming part of the aerodynamic device may be made of a cloth, plastic, non-woven material or any kind of sheet material being able to collapse when the vehicle not is moving and being deployed by the coanda effect when the vehicle is moving.

The part of the flexible material of the aerodynamic device arranged to extend beyond the rear end of the vehicle or trailer when deployed is preferably extending between 0,2 and 2 m, more preferably between 0,3 and 1,5 m and most preferably between 0,4 and 1,0 meters. The exact length is not crucial for the inventive idea even though it is obvious that a very short extension of the flexible, e.g. less than 10 cm will not contribute to any significant reduction of the air drag force even though there will a reduced air drag force working on the vehicle. On the other hand, a very long part of the flexible sheet extending from the rear end of the vehicle, e.g. longer than 3 meters, will be hard to allow to deploy to a desired shape and to be self supported and sufficiently rigid in its deployed state. Furthermore, the sheet will also be too long to conveniently be stored and hang along the vehicle when it is in its un-deployed state and a part of the sheet may thus be dragged on the ground when the vehicle is moving at low velocities. Hence, the length of the sheet extending from the rear part shall be sufficiently long to provide a desired drag reducing effect while it shall not be too long such that it will be hard to make the sheet deploy as desired or the sheet may be difficult to store or even being dragged on the ground when not deployed.

### BRIEF DESCRIPTION OF DRAWINGS

- Fig. 1: Isometric view of rear end of a truck without any drag reducing aerodynamic device
- Fig. 2: Isometric view of rear end of a truck provided with a drag reducing aerodynamic device in a deployed state
- Fig. 3: Side view of rear end of a truck provided with a drag reducing aerodynamic device in a deployed state
- Fig. 4: Side view of rear end of a truck provided with a drag reducing aerodynamic device at rest
- Fig. 5: Side view of rear end of a truck provided with a drag reducing aerodynamic device in a deployed state wherein the aerodynamic device is provided with form shaping battens
- Fig. 6 a, b: A schematic view of the air streams around the rear end of a truck which is moving without the aerodynamic device (fig. 5 a) and when the truck is provided with the aerodynamic device (fig. 5b)

### EMBODIMENT(S) OF THE INVENTION

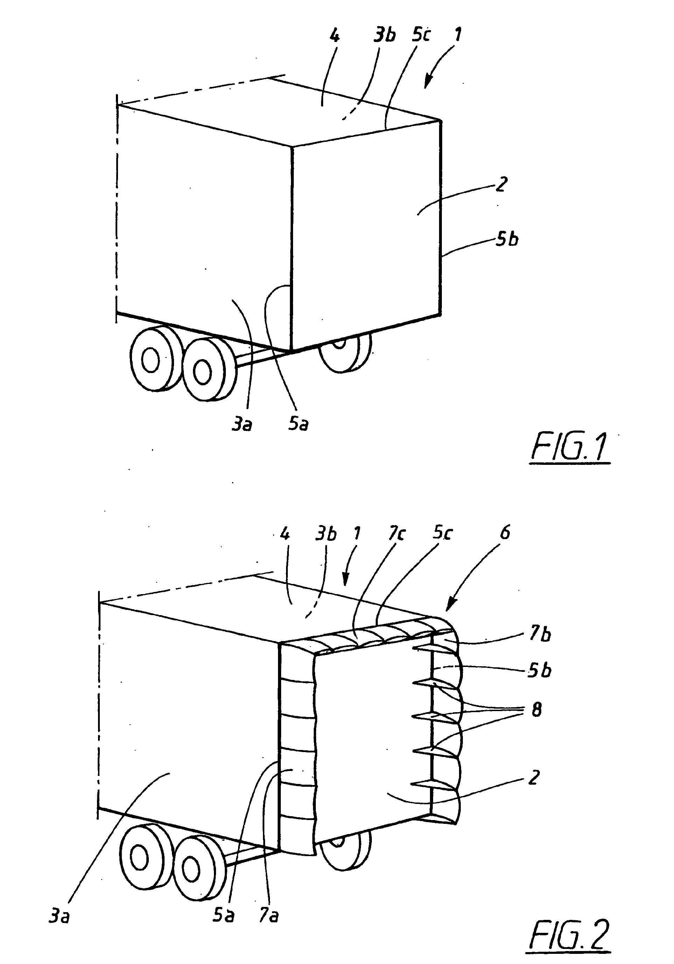

Figure 1 shows a box-shaped rear end of an ordinary truck 1. The truck has a rear end panel 2, first and second side panels 3 a, b and a roof panel 4. The side panels 3 a, b and the roof panel 4 are right angled with respect to the rear end panel 2 such that there are sharp edges 5 a, b formed between the side panels 3 a, b and the rear end panel 2 and a sharp edge 5 c between the roof panel 4 and the rear end panel 2.

In figure 2 has the truck 1 in figure 1 been provided with an aerodynamic device 6 which is shown in its deployed state. The aerodynamic device comprises flexible sheets 7 a, b, c attached to the respective edges 5 a, b, c. In this view is the outer side of the flexible sheets 7a, c attached to the left side edge 5a respectively to the roof edge 5c visible while the inner side of the flexible sheet 7 b attached to the right side is visible. The aerodynamic device 6 further comprises restrictors 8 which are visible on the inside of the flexible sheet 7 b at the right side of the truck 1. In this case are the restrictors 8 exemplified by pieces of sheet material. The restrictors 8 have essentially the shape of a segment of a circle having its curved line attached along a horizontal line on the flexible sheet 7 b and an essentially straight border line of the segment attached to the rear end panel 2 of the truck 1. Likewise, restrictors are located on the other flexible sheets 7 a, c but are not visible in this view. The aerodynamic device is deployed by means of the relative velocity between the truck 1 and the ambient air when the truck 1 is moving in a forward direction. The motion of the truck 1 induces a pressure difference between the inner side (high pressure side) and the outer side (low pressure side) such that the sheet will be sucked outwards to a deployed state. The restrictors 8 are thus limiting the possible outwards movement of the sheets 7 a, b, c such that the sheets will achieve a desired shape. It is obvious that the skilled person in the art may modify the shape of the restrictors 8 and/or the flexible sheets 7 a, b, c such that another desired deployed shape is achieved.

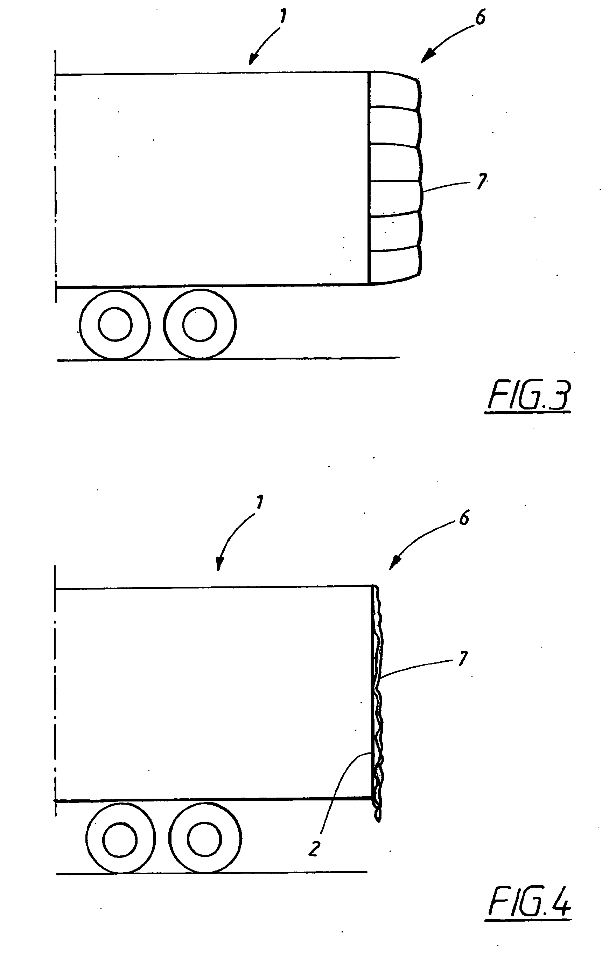

Figure 3 is a side view of truck 1 provided with the drag reducing aerodynamic device 6 shown in its deployed state.

Figure 4 is a side view of a rear end of the truck 1 provided with the drag reducing aerodynamic device 6 at rest. The flexible sheets 7 are hanging along the rear end panel 2 of the truck 1.

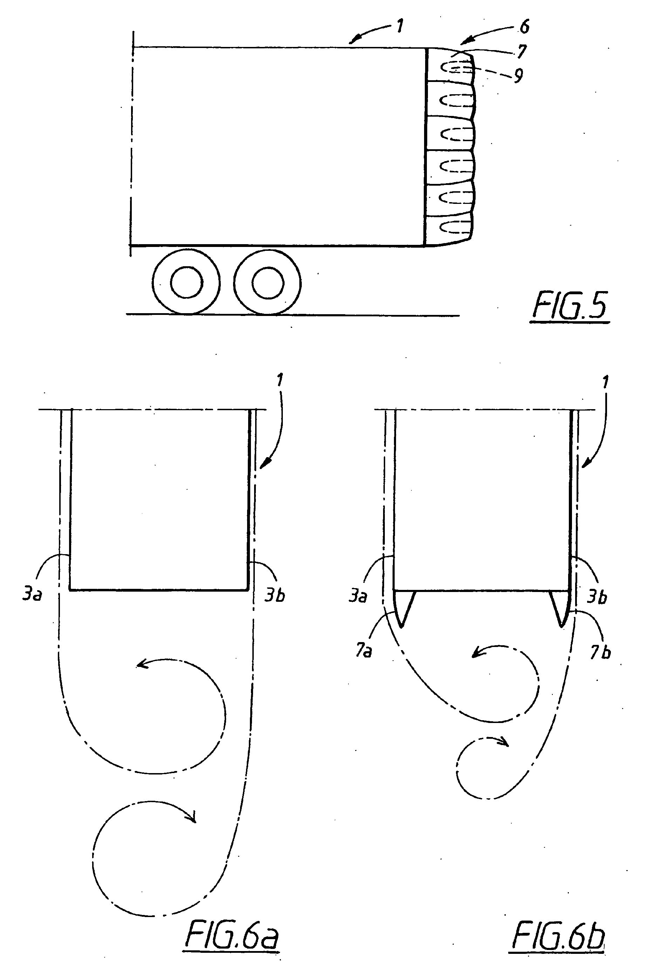

In figure 5 is shown the same view of the truck 1 as in figure 3 but with the difference that the flexible sheets 7 of the drag reducing device 6 has been provided with form shaping battens 9. The battens 9 may either be an integrated part of the flexible sheet 7 or a detachable device which may be easily attached and detached.

In figure 6 is shown a schematic view of the air flow or turbulence of air around the rear end of the truck 1, as seen from above, when it is moving in a forward direction. The lengths of the arrows are meant to be proportional to the drag resistance influencing the truck 1 when it is moving. In figure 6a, an ordinary truck without any aerodynamic device is shown. The long arrows behind the rear end of the truck 1 indicate a rather large drag resistance. The sharp edges 5 a, b will result in sudden detachment of the air streaming along the sides 3 a, b of the edge and there will thus be a vacuum or a significant lower pressure at the rear end of the truck 1 such that a large drag resistance is produced. In figure 6b such a sudden detachment of the airstream along the sides 3 a, b is avoided by the aerodynamic device 6. The smoothly curved flexible sheets 7 a, b will contribute to a better streamlining of the truck 1 at the rear end. Hence, there will be less vacuum or a not so significant lower pressure at the rear end of the truck and the air streaming along the sides 3 a, b of the truck 1 will more smoothly detach from the truck 1 as indicated by the shorter arrows corresponding to a lower drag resistance.

## Claims

1. An aerodynamic device (6) for reducing the wind resistance of a vehicle (1) or a trailer (1), said aerodynamic device (6) intended to be mounted to a vehicle structure at or close to the rear end of said vehicle (1) or trailer (1), said device (6) comprising a flexible sheet material (7 a, b, c) having at least a part arranged to the vehicle (1) or trailer (1) such that it is hanging along the vehicle structure when it is in a resting position and said part being arranged to extend beyond the rear end of the vehicle (1) or trailer (1) when deployed, said flexible sheet material (7 a, b, c) comprising an inner side and an outer side and the flexible sheet material (7 a, b, c) is attached to the vehicle structure such that it deploys as a result of the coanda effect inducing a lower pressure on the outer side than on the inner side of the flexible sheet material (7 a, b, c) when the vehicle (1) or trailer (1) is moving
**characterized in that** the flexible sheet structure, when deployed, is be shaped to gently curve inwards towards a longitudinal centre-line of the vehicle and is attached along one of it sides to a side panel (3 a or b) of the vehicle structure or in close vicinity to the conjunction of the side panel and the end part of the vehicle structure or trailer (1) forming an edge (5 a or b) so as to provide a continuation of the vehicle structure which is essentially in flush with the vehicle structure when the aerodynamic device (6) is deployed, said flexible sheet material (7 a, b, c) being further attached to the vehicle structure by at least one restrictor (8) such that the restrictor (8) by the restriction shapes the flexible sheet material (7 a, b, c) in its deployed state to a desired shape.

2. The aerodynamic device (6) according to claim 1 characterized i n that said aerodynamic device (6) is arranged to deploy completely at a relative velocity of the vehicle (1) and surrounding air at a velocity of 50 km/h or above

3. The aerodynamic device (6) according to claim 2 characterized i n that said aerodynamic device (6) is arranged to deploy completely at a relative velocity of the vehicle (1) and surrounding air at a velocity of 70 km/h or above

4. The aerodynamic device (6) according to claim 1 characterized i n that said aerodynamic device (6) is arranged to deploy completely at a relative velocity of the vehicle (1) and surrounding air at a velocity of 80 km/h or above

5. The aerodynamic device (6) according to anyone of the previous claims **characterized in that** said restrictor (8) is made of a collapsible material such as a rope, wire, flexible sheet or the like or by a rigid structure which is pivotally connected to the vehicle structure such that it may pivot or turn around an axis so as to hang along the frame of the vehicle (1) when the flexible sheet (7 a, b, c) is in a resting position.

6. The aerodynamic device (6) according to anyone of the previous claims **characterized in that** said restrictor (8) is attached to the flexible sheet material (7 a, b, c) at or close to a free edge of the sheet (7 a, b, c).

7. The aerodynamic device (6) according to anyone of the previous claims **characterized in that** said flexible sheet material (7 a, b, c) is provided with rigid structures which make the flexible sheet material (7 a, b, c) form a desired shape when it is in its deployed state.

8. The aerodynamic device (6) according to claim 7 **characterized i n** that said rigid structures are smoothly curved such that they will shape the flexible sheet material (7 a, b, c) to smoothly bend inwards..

9. The aerodynamic device (6) according to anyone of the previous claims **characterized in that** said flexible sheet material (7 a, b, c) is made of a cloth, plastic or non-woven material.

10. The aerodynamic device (6) according to anyone of the previous claims **characterized in that** the length of said part of the flexible sheet material (7 a, b, c) arranged to extend beyond the rear end of the vehicle (1) or trailer (1) when deployed is between 0,2 and 2 m, more preferably between 0,3 and 1,5 meters and most preferably between 0,4 and 1 meter.

11. The aerodynamic device (6) according to anyone of the previous claims **characterized in that** a free edge of the flexible sheet material (7 a, b, c) is provided with a rigid structure such as a batten.

12. A vehicle (1) or trailer (1) comprising an aerodynamic device (6) according to anyone of claims 1 - 11.

## Patentansprüche

1. Aerodynamische Vorrichtung (6) zur Verringerung des Windwiderstands eines Fahrzeugs (1) oder eines Anhängers (1), wobei die aerodynamische Vorrichtung (6) zur Befestigung an einem Fahrzeugaufbau an oder in der Nähe des hinteren Endes des Fahrzeugs (1) oder Anhängers (1) dient, wobei die Vorrichtung (6) ein flexibles Bahnmaterial (7a, b, c) umfasst, das wenigstens einen Teil aufweist, der an dem Fahrzeug (1) oder dem Anhänger (1) so angeordnet ist, dass er entlang des Fahrzeugaufbaus hängt, wenn er sich in einer Ruheposition befindet, und der Teil bei Entfaltung so angeordnet ist, dass er sich über das hintere Ende des Fahrzeugs (1) oder Anhängers (1) hinaus erstreckt, wobei das flexible Bahnmaterial (7a, b, c) eine Innenseite und eine Außenseite umfasst und das flexible Bahnmaterial (7a, b, c) an dem Fahrzeugaufbau so befestigt ist, dass es sich aufgrund des Coanda-Effekts entfaltet, der einen geringeren Druck an der Außenseite erzeugt als an der Innenseite des flexiblen Bahnmaterials (7a, b, c), wenn das Fahrzeug (1) oder der Anhänger (1) sich bewegt,
**dadurch gekennzeichnet, dass** der flexible Bahnaufbau, wenn er entfaltet ist, so geformt ist, dass er sich leicht nach innen in Richtung einer Längsmittellinie des Fahrzeugs krümmt, und entlang einer seiner Seiten an einer Seitenverkleidung (3a oder b) des Fahrzeugaufbaus oder sehr nahe an der Verbindung der Seitenverkleidung und dem Endteil des Fahrzeugaufbaus oder Anhängers (1) angebracht ist, die eine Kante (5a oder b) bildet, um eine Fortführung des Fahrzeugaufbaus zu schaffen, die im Wesentlichen mit dem Fahrzeugaufbau bündig ist, wenn die aerodynamische Vorrichtung (6) entfaltet ist, wobei das flexible Bahnmaterial (7a, b, c) außerdem mittels wenigstens eines Beschränkungselements (8) an dem Fahrzeugaufbau so befestigt ist, dass das Beschränkungselement (8) durch die Beschränkung das flexible Bahnmaterial (7a, b, c) in seinem entfalteten Zustand zu einer gewünschten Form formt.

2. Aerodynamische Vorrichtung (6) nach Anspruch 1, **dadurch gekennzeichnet, dass** die aerodynamische Vorrichtung (6) so angeordnet ist, dass sie sich bei einer relativen Geschwindigkeit des Fahrzeugs (1) und der umgebenden Luft bei einer Geschwindigkeit von 50 km/h oder darüber vollständig entfaltet.

3. Aerodynamische Vorrichtung (6) nach Anspruch 2, **dadurch gekennzeichnet, dass** die aerodynamische Vorrichtung (6) so angeordnet ist, dass sie sich bei einer relativen Geschwindigkeit des Fahrzeugs (1) und der umgebenden Luft bei einer Geschwindigkeit von 70 km/h oder darüber vollständig entfaltet.

4. Aerodynamische Vorrichtung (6) nach Anspruch 1, **dadurch gekennzeichnet, dass** die aerodynamische Vorrichtung (6) so angeordnet ist, dass sie sich bei einer relativen Geschwindigkeit des Fahrzeugs (1) und der umgebenden Luft bei einer Geschwindigkeit von 80 km/h oder darüber vollständig entfaltet.

5. Aerodynamische Vorrichtung (6) nach irgendeinem der vorhergehenden Ansprüche, **dadurch gekennzeichnet, dass** das Beschränkungselement (8) von einem zusammenfallbaren Material, wie z.B. einem Seil, einem Draht, einer flexiblen Bahn oder dergleichen oder durch eine feste Struktur gebildet wird, die mit dem Fahrzeugaufbau schwenkbar verbunden ist, so dass sie um eine Achse so verschwenken oder drehen kann, dass sie entlang des Rahmens des Fahrzeugs (1) hängt, wenn sich die flexible Bahn (7a, b, c) in einer Ruheposition befindet.

6. Aerodynamische Vorrichtung (6) nach irgendeinem der vorhergehenden Ansprüche, **dadurch gekennzeichnet, dass** das Beschränkungselement (8) an dem flexiblen Bahnmaterial (7a, b, c) an oder in der Nähe eines freien Randes der Bahn (7a, b, c) befestigt ist.

7. Aerodynamische Vorrichtung (6) nach irgendeinem der vorhergehenden Ansprüche, **dadurch gekennzeichnet, dass** das flexible Bahnmaterial (7a, b, c) mit festen Strukturen versehen ist, die dem flexiblen Bahnmaterial (7a, b, c) eine gewünschte Form geben, wenn es sich in seinem entfalteten Zustand befindet.

8. Aerodynamische Vorrichtung (6) nach Anspruch 7, **dadurch gekennzeichnet, dass** die festen Strukturen leicht gekrümmt sind, so dass sie das flexible Bahnmaterial (7a, b, c) so formen, dass es sich leicht nach innen biegt.

9. Aerodynamische Vorrichtung (6) nach irgendeinem der vorhergehenden Ansprüche, **dadurch gekennzeichnet, dass** das flexible Bahnmaterial (7a, b, c) aus einem Tuch, Kunststoff oder Vliesmaterial gebildet ist.

10. Aerodynamische Vorrichtung (6) nach irgendeinem der vorhergehenden Ansprüche, **dadurch gekennzeichnet, dass** die Länge des Teils des flexiblen Bahnmaterials (7a, b, c), das so angeordnet ist, dass es sich über das hintere Ende des Fahrzeugs (1) oder des Anhängers (1) hinaus erstreckt, wenn es entfaltet ist, zwischen 0,2 und 2 m beträgt, bevorzugter zwischen 0,3 und 1,5 m und am meisten bevorzugt zwischen 0,4 und 1 m.

11. Aerodynamische Vorrichtung (6) nach irgendeinem der vorhergehenden Ansprüche, **dadurch gekennzeichnet, dass** ein freier Rand des flexiblen Bahnmaterials (7a, b, c) mit einer festen Struktur, wie z.B. einer Latte versehen ist.

12. Fahrzeug (1) oder Anhänger (1) mit einer aerodynamischen Vorrichtung (6) nach irgendeinem der Ansprüche 1 bis 11.

## Revendications

1. Dispositif aérodynamique (6) pour réduire la résistance au vent d'un véhicule (1) ou d'une remorque (1), le dispositif aérodynamique (6) étant prévu pour être monté sur une structure de véhicule au niveau ou à proximité de l'extrémité arrière du véhicule (1) ou de la remorque (1), le dispositif comprenant un matériau en feuille souple (7a, b, c) ayant au moins une partie agencée sur le véhicule (1) ou la remorque (1) de sorte qu'elle soit accrochée le long de la structure du véhicule lorsqu'elle est dans une position de repos et la partie étant agencée pour s'étendre au-delà de l'extrémité arrière du véhicule (1) ou de la remorque (1) lorsqu'elle est déployée, le matériau en feuille souple (7a, b, c) comprenant un côté intérieur et un côté extérieur et le matériau en feuille souple (7a, b, c) est fixé sur la structure de véhicule de sorte qu'il se déploie en résultat de l'effet Coanda induisant une pression inférieure sur le côté extérieur par rapport au côté intérieur du matériau en feuille souple (7a, b, c) lorsque le véhicule (1) ou la semi-remorque (1) se déplace,
**caractérisé en ce que** la structure en feuille souple, lorsqu'elle est déployée, est mise en forme pour s'incurver doucement vers l'intérieur en direction d'un axe central longitudinal du véhicule et est fixée le long d'un de ses côtés à un panneau latéral (3a ou 3b) de la structure de véhicule ou à proximité étroite de la liaison du panneau latéral et de la partie d'extrémité de la structure de véhicule ou de la remorque (1) en formant un bord (5a ou 5b) de manière à fournir une continuité de la structure de véhicule qui affleure essentiellement à la structure du véhicule lorsque le dispositif aérodynamique (6) est déployé, le matériau en feuille souple (7a, b, c) étant de plus fixé sur la structure de véhicule par au moins un élément de retenue (8) de sorte que l'élément de retenue (8) par la retenue met en forme le matériau en feuille souple (7a, b, c) dans son état déployé selon une forme voulue.

2. Dispositif aérodynamique (6) selon la revendication 1, **caractérisé en ce que** le dispositif aérodynamique (6) est agencé pour se déployer entièrement à une vitesse relative du véhicule (1) et de l'air environnant égale à une vitesse de 50 km/h ou plus.

3. Dispositif aérodynamique (6) selon la revendication 2, **caractérisé en ce que** le dispositif aérodynamique (6) est agencé pour se déployer entièrement à une vitesse relative du véhicule (1) et de l'air environnant égale à une vitesse de 70 km/h ou plus.

4. Dispositif aérodynamique (6) selon la revendication 1, **caractérisé en ce que** le dispositif aérodynamique (6) est agencé pour se déployer entièrement à une vitesse relative du véhicule (1) et de l'air environnant égale à une vitesse de 80 km/h ou plus.

5. Dispositif aérodynamique (6) selon l'une quelconque des revendications précédentes, **caractérisé en ce que** l'élément de retenue (8) est constitué d'un matériau rabattable tel qu'une corde, un câble, une feuille souple ou analogue ou d'une structure rigide qui est reliée de manière pivotante à la structure de véhicule de sorte qu'elle peut pivoter ou tourner autour d'un axe de manière à être accrochée le long du cadre du véhicule (1) lorsque la feuille souple (7a, b, c) est dans une position de repos.

6. Dispositif aérodynamique (6) selon l'une quelconque des revendications précédentes, **caractérisé en ce que** l'élément de retenue (8) est fixé sur le matériau en feuille souple (7a, b, c) au niveau du bord libre de la feuille (7a, b, c) ou à proximité de celui-ci.

7. Dispositif aérodynamique (6) selon l'une quelconque des revendications précédentes, **caractérisé en ce que** le matériau en feuille souple (7a, b, c) est muni de structures rigides qui donnent au matériau en feuille souple (7a, b, c) une forme voulue lorsqu'elle est dans son état déployé.

8. Dispositif aérodynamique (6) selon la revendication 7, **caractérisé en ce que** les structures rigides sont incurvées doucement de sorte qu'elles vont mettre en forme le matériau en feuille souple (7a, b, c) en courbe douce vers l'intérieur.

9. Dispositif aérodynamique (6) selon l'une quelconque des revendications précédentes, **caractérisé en ce que** le matériau en feuille souple (7a, b, c) est constitué d'un matériau de tissu, de matière plastique ou non-tissé.

10. Dispositif aérodynamique selon l'une quelconque des revendications précédentes, **caractérisé en ce que** la longueur de la partie du matériau en feuille souple (7a, b, c) agencée pour s'étendre au-delà de l'extrémité arrière du véhicule (1) ou de la remorque (1) lorsqu'elle est déployée est entre 0,2 et 2 m, de manière plus préférée entre 0,3 et 1,5 m et de la manière la plus préférée entre 0,4 est 1 m.

11. Dispositif aérodynamique (6) selon l'une quelconque des revendications précédentes, **caractérisé en ce qu'**un bord libre du matériau en feuille (7a, b, c) est muni d'une structure rigide telle qu'une latte.

12. Véhicule (1) ou remorque (1) comprenant un dispositif aérodynamique (6) selon l'une quelconque des revendications 1 à 11.
